# EUROPEAN PATENT APPLICATION

(11) **EP 2 621 147 A1**
(43) Date of publication of application: **31.07.2013**
(21) Application number: 12305088.2
(22) Date of filing: 24.01.2012
(51) Int. Cl.: H04L 29/12, H04L 12/46, H04L 12/66, H04W 8/26

(54) **P-GW private shared interconnection**

(71) Applicant: Alcatel Lucent, 75007 Paris (FR)
(72) Inventor: Mongazon-Cazavet, Bruno, 91620 NOZAY (FR); Melia, Telemaco, 91620 NOZAY (FR); El Mlaheg, Amine, 91620 NOZAY (FR)
(74) Representative: Louiset, Raphael

(57) **Abstract**

A method for permitting roaming in a communication system comprising a plurality of packet data network, each being provided with a packet data network gateway (1-5), said method comprising the following steps
- interconnecting the packet data network gateways (1-5) in a interconnect (10) implementing a predefined IP addressing model;
- storing within each packet data network gateway (1-5) an information about the currently involved packet data network gateway in the said interconnect (10).

## Description

The present invention relates to a roaming method and appropriate devices therefore within evolved packet system.

### BACKGROUND OF THE INVENTION

With the continuous expanding of Evolved Packet System (EPS) networks, one of the most persistent challenges for telecom operators is ensuring seamless mobility (handover), or more generally dynamic interworking, between heterogeneous access technologies (notably, earlier 3GPP technologies such as GSM/EDGE, UTRAN and LTE, as well as non-3GPP technologies such as eHRPD, CDMA2000, WLAN, DSL/Cable, and WiMAX). In fact, such feature is essential for service continuity through flat heterogeneous networks, permitting, for example, ongoing sessions maintain while moving from one access technology to another.

Furthermore, current trends are to consider LTE access as a way to provide bandwidth-intensive services and cost effective connection capabilities. Although this solves some problems but this also arises further challenges with regards to dynamicity and cost effective requirement of these deployments. In particular, portable and stand-alone compact LTE networks (i.e. a single box includes the eUTRAN, the MME, the P-GW/S-GW and HSS) need efficient mechanisms to interconnect between each other.

Available 3GPP specifications teach how large EPS systems should be interconnected.

However, besides 3GPP guidelines performances aspects, a number of other considerations are important for network operators, including especially reduced deployment cost. For example, at least three additional interfaces (called S101, S102 and S103) are needed within EPS architecture for only LTE-CDMA interworking.

Considering the facts, 3GPP mechanisms for large EPS systems interworking are too costly and complex to address the efficient and dynamic nature of the targeted deployments. In fact, current solutions are based on roaming interfaces between the home and the visited administrative domain (S8 for PDN-GW interface in the case of home routed traffic, and S9 for H-PCRF interface in the case of local breakout traffic) where traffic can be home routed or locally anchored at the visited domain (for more details, see 3GPP TS 23.401 "Roaming Architecture"). In either case, there is no session continuity when the UE moves from the home to the visited domain (or vice versa) including no address preservation. Furthermore, this requires the interconnection of all the involved entities, namely a mesh network between all Servicing Gateways (S-GW), all PDN Gateways (P-GW), and all PCRF (Policy and Charging Rules Function), leading to the need for more interconnection means between autonomous networks which may see their autonomy affected.

An alternative is to rely on DSMIP (RFC 5555) based solutions by adding a Home Agent (HA) on top of the PLMNs to interconnect. This, however, requires extra software on User Equipment (UE) and adds extra overhead over-the-air for packet handling.

Obviously, this alternative solution is non-encouraging as it impacts UEs, particularly mobile ones, while among key consideration for competitive deployment of EPS is the availability of low-cost terminals with long battery life.

Accordingly, known solutions, whatever they are client based or network based, do not favor networks interworking by rendering it complex.

One possible object of the present invention is therefore to address the above-noted and other problems with the related art.

Another possible object of the present invention is to favor multi-access convergence at highest dynamicity and at affordable deployment cost.

Another possible object of the present invention is to provide a method enabling ongoing session handover while preserving the IP address allocated thereto.

Another possible object of the present invention is to provide a simple, dynamic, and distributed roaming architecture that does not require the complex machinery standardized by the 3 GPP.

Another possible object of the present invention is to propose a method ensuring wherever possible an efficient and dynamic interworking mechanism between heterogeneous access networks, without impacting UEs.

Another possible object of the present invention is to provide an alternative solution to what is specified by 3GPP concerning to above-cited problems.

Another possible objet of the present invention is to provide an efficient interworking mechanism within mobile network infrastructures so as to allow wide area service coverage.

Another possible object of the present invention is to provide an efficient and smooth handover mechanism between different access technologies.

### DESCRIPTION OF THE DRAWING

The objects, advantages and other features of the present invention will become more apparent from the following disclosure. The following non-restrictive description of a preferred embodiment of the invention is given for the purpose of exemplification only with reference to the accompanying drawing in which
- figure 1 is a schematic diagram illustrating an interconnect of a plurality of packet data network gateways;
- figures 2-3 are schematic diagrams illustrating joining and leaving processes of the interconnect ;
- figure 4 illustrates session creation when the UE is in home PLMN;
- figure 5-7 illustrate session creation when the UE is in a Visited PLMN;
- figure 8 illustrates session handover when the UE is moving between non-home PLMNs; and
- figure 9 illustrates session handover when the UE is returning home PLMN.

### SUMMARY OF THE INVENTION

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key of critical elements of the invention or to delineate the scope of the invention. Its sole purpose is to present some concepts in a simplified form as a prelude to the more detailed description that is discussed later.

The present invention relates to a packet data network gateway providing connectivity to a user equipment to a packet data network and configured to allocate, from a predefined address space, an IP address to the user equipment that uses to connect to the said packet data network, the said packet data network gateway being further configured to multicast the allocated IP address over a predefined interconnect.

The present invention further relates to an interconnect of a plurality of packet data network gateways, each of the said plurality of packet data network gateways providing connectivity to a user equipment to a packet data network and configured
- to allocate, from a predefined address space, an IP address to the user equipment that uses to connect to the said packet data network; and
- to multicast the allocated IP address over the said interconnect.

The present invention further relates to a method for permitting roaming in a communication system comprising a plurality of packet data network, each being provided with a packet data network gateway, said method comprising the following steps
- interconnecting the packet data network gateways in a interconnect implementing a predefined IP addressing model;
- storing within each packet data network gateway an information about the currently involved packet data network gateway in the said interconnect.

While the invention is susceptible to various modification and alternative forms, specific embodiments thereof have been shown by way of example in the drawings. It should be understood, however, that the description herein of specific embodiments is not intended to limit the invention to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

### DETAILED DESCRIPTION OF ILLUSTRATIVE EMBODIMENTS

The EPS system comprises the evolved UTRAN (eUTRAN) and the Evolved Packet Core (EPC). The eUTRAN provides wireless access to mobile devices. The EPC is mainly in charge of handling control plane (Mobility Management Entity - MME) and data plane (Serving Gateway SGW, and Packet Data Network Gateway PDN-GW or P-GW).

P-GW represents the interface to the PDN, functioning as the anchor point for all the uplink and downlink traffic to/from the UE and thereby providing connectivity to UE. In particular, a key role of P-GW is to act as the anchor for mobility between 3GPP and non-3GPP technologies.

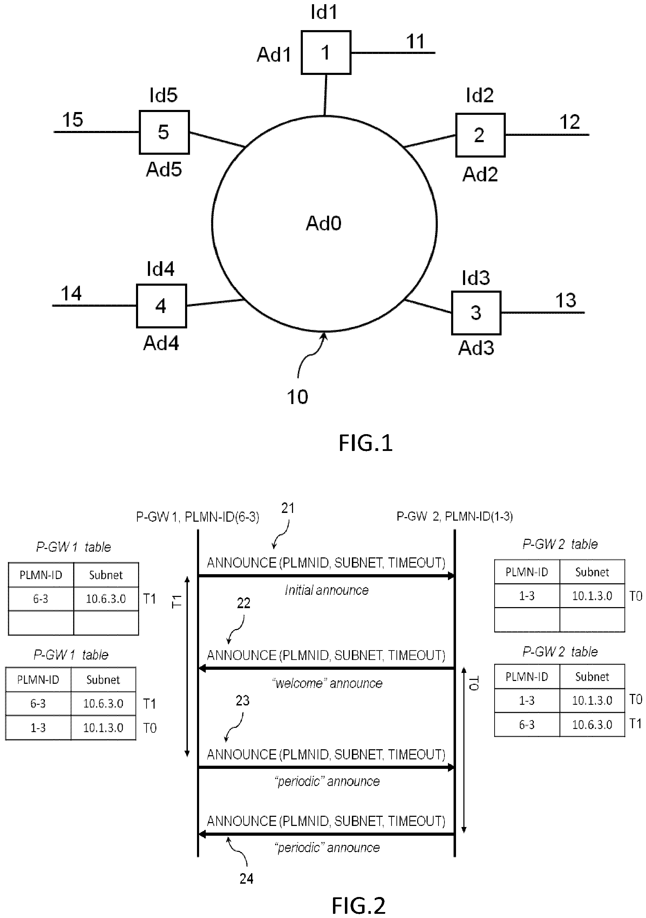

With reference to figure 1, an evolved roaming architecture within a flat EPS system including therein a plurality of access technologies is achieved through a dedicated interconnect 10 of P-GWs 1-5. By an "interconnect", a plurality of communication pathways established over an information-carrying medium is meant. The resulting logical network of P-GWs 1-5 may be implemented over Ethernet, or more generally over any appropriate wired and/or wireless network. Such P-GWs 1-5 interconnect 10 should preferably be secured.

The P-GWs 1-5 are the point of interconnects to external IP networks, respectively, through the Service Gateway Interfaces (SGI) 11-15.

Each P-GW 1-5 within this dedicated interconnect 10 is assigned a unique identifier Id1-Id5. In one embodiment, such distinctive identifiers Id1-Id5 may be the PLMN (Public Land Mobile Network) identifier obtained with combination of the MCC (Mobile Country Code) and the MNC (Mobile Network Code). As an illustrative example, the identifier of P-GW 1 may be as follow: PLMN-ID (MCC=6, MNC=2).

Furthermore, the dedicated interconnect 10 of P-GWs 1-5 implements an IP addressing model having the following features:
- P-GW 1-5 systems connect dynamically through a private shared address space Ad0. The private shared address space Ad0 is used for UE IP's address and P-GW 1-5 interface to the interconnect bus. As an illustrative example, the private address space Ad0 may be a Class A 10.0.0.0 address space providing for each P-GW 1-5 a Class A IP address block Ad1-Ad5, for example 10.6.2.0/24 for P-GW 1, 10.1.3.0/24 for P-GW 2, 10.5.2.0/24 for P-GW 3 and so on. Preferably, the provided IP address blocks Ad1-Ad5 and the identifiers Id1-Id5 of P-GW 1-5 are correlated using automatic conversion mechanism (i.e. in such a way that the IP address block Ad1-Ad5 may be deduced from the identifiers Id1-Id5, and inversely). For example, the allocated IP address block Ad5 for the P-GW 5 whose the identifier is PLMN-ID(MCC=1, MNC=4), may be 10.1.4.0/24;
- P-GW 1-5 systems coordinate for private address space management using a dedicated protocol link-local multicast mode (in particular, defining an all-routers multicast address such as 224.0.0.2).

It is to be noted that when the P-GWs identifiers Id1-Id5 are defined on the basis of PLMN (i.e. MCC, and MNC), a MCC list mapped to 200-254, and a MNC list from 0 to 254 lead to an address space of the form 10.mcc.mnc.0/24. In one embodiment, 10.mcc.mnc.0/24, 10.mcc.mnc.1/24, and 10.mcc.mnc.254/24 IP address blocks may be respectively allocated for P-GW network, P-GW interface to interconnect bus, and for P-GW network broadcast. In this case, which is consistent with ITU standards for addresses allocation, a total of 252 UE per P-GW and of 51000 interconnected P-GWs for 12852000 subscribers are allowed.

Accordingly and advantageously, the dedicated interconnection 10 of P-GW 1-5
- supports IP multicast;
- provides dynamic IP address allocation of end-points;
- supports RFC 5227 (duplicate address detection);
- is bitrate and latency suited for roaming model.

The setup of the dedicated network 10 of P-GWs 1-5 comprises the following steps:
- connection to P-GW interconnect bus;
- computing candidate IP address of P-GW 1-5 interface to interconnect bus using the P-GW identifier Id1-Id5, namely the PLMN-ID. For example, if the identifier Id4 of P-GW 4 is PLMN-ID: MCC=1 and MNC=4, then the computed candidate IP address for this P-GW 4 is 10.1.4.1;
- configuring interconnect bus address using RFC 5227 principles. If a P-GW with the same address is already present on the interconnect bus, this interconnect bus will not be usable by the P-GW. If no UE is connected, the administrator can resolve the conflicting PLMN-ID and restart the P-GW;
- interfacing to interconnect the configured bus, in other words validating the candidate IP address;
- multicasting the validated IP address in order to announce for the others P-GW the presence of each newly joined P-GW;
- receiving the announce by the already present P-GWs and accordingly updating their respective P-GW table (i.e. adding the IP address of the newly joined P-GW), then sending their respective own announce;
- receiving the announces by the newly joined P-GW, and accordingly updating its P-GW table.

Figure 2 illustrates the signalling flow required to setup the interconnection (routing) between the different P-GWs 1-5, wherein each P-GW is configured to
- perform an initial announce as soon as it joins the interconnect bus (step 21 in figure 2);
- provide its own announce ("welcome announce") when receiving an initial announce (step 22 in figure 2) ;
- perform periodic announce on its timer basis (step 23 and 24 in figure 2) and accordingly update its P-GW table (i.e. periodically repeat the above tow steps 21 and 22).

It is to be noted that when a P-GW receives an announcement, it creates a route entry for the advertised subnet towards the interconnect interface.

Preferably, a P-GW announce is sent (Multicast 224.0.0.2) multiple times so as to prevent packet loss.

Moreover, Figure 2 illustrates the P-GW table update, respectively of P-GW 1 identified with PLMN-ID(MCC=6, MNC=3) and P-GW 2 identified with PLMN-ID(MCC=1, MNC=3). In fact, subsequently to the initial announce (step 21 in figure 2) made by P-GW 1 as soon as it joins the interconnect 10 of P-GWs, P-GW 2 updates its P-GW table by adding therein the identifier Id1 (i.e. PLMN-ID(6-3)) and the subnet of the P-GW 1, as shown in the right hand side of figure 2. Likewise, as shown in the left hand side of figure 2, P-GW 1 updates its P-GW table by adding therein the identifier Id2 (i.e. PLMN-ID(1-3)) and the subnet of P-GW 2 that it retrieves from the received "welcome" announce (step 22 in figure 2) sent by P-GW 2. Each P-GW initializes its P-GW table with its own Identifier and subnet.

Upon establishment of P-GW 1 interconnect BUS, UEs attached thereto are ready to get IP services. For brevity we report the network attachment of a UE connecting to its home network and to a visited network.

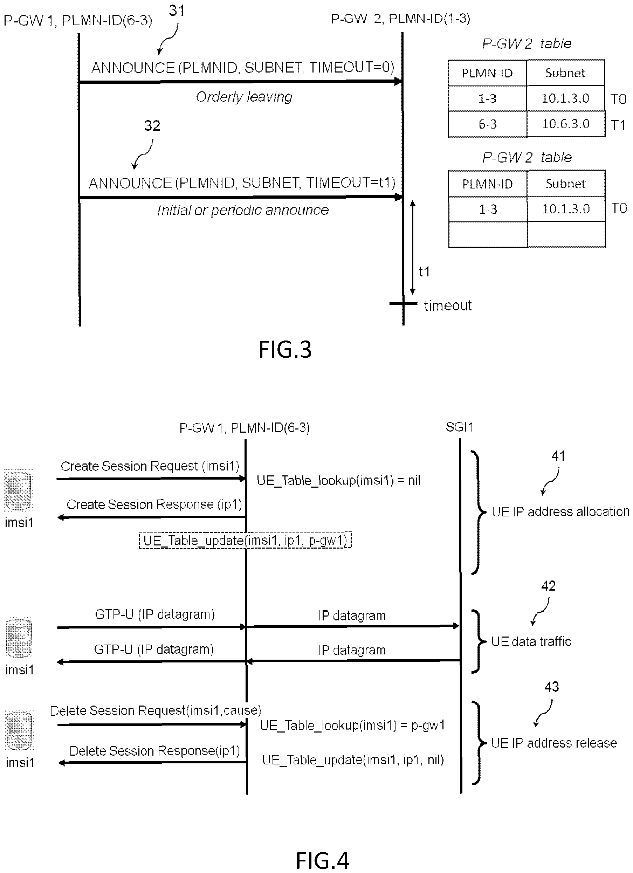

Conversely, Figure 3 schematically illustrates the required steps to delete a P-GW from the interconnect bus. In fact, in a normal P-GW termination (or "orderly leaving"), a P-GW removes a P-GW table entry if it receives an announce with timeout= 0 (message 31 in figure 1). With reference to the two tables on the right hand side of figure 3, the identifier PLMN-ID 6-3 of the leaving P-GW 1 is deleted from the P-GW table of P-GW 2 as soon as P-GW 2 receives the orderly leaving message from P-GW 1. An orderly leaving message may take the following form ANNOUCE(PLMNID, SUBSET, 0).

It is to be noted that
- before to orderly leave, a P-GW shall disconnect all UE's currently attached thereto; and
- when an "orderly leaving" announce is received from a P-GW, receiving P-GW subsequently disconnects visiting UEs from the leaving P-GW and removes tunnels toward leaving P-GW.

In a variant, a P-GW discards a P-GW table entry if no announce is received in a previously advertised timeout t1 (message 32 in figure 3), said abnormal P-GW termination. Accordingly, in more general terms, when a P-GW timeout occurs,
- receiving P-GW disconnects visiting UE's from the leaving P-GW and removes tunnels toward failing P-GW;
- UEs from receiving P-GW those were attached to failing P-GW loose connectivity and shall reconnect; and
- tunnels toward failing P-GW are deleted.

Preferably, in order to prevent packet loss, announce messages 31 and 32 may be sent in multicast (i.e. to 224.0.0.2) multiple times.

It is to be noted that when a P-GW removes a table entry, following a normal or abnormal P-GW termination, it removes the associated route entry towards the interconnect interface.

In addition to the described protocol exchange it should be noted that when a P-GW receives a P-GW leave message for a specific PLMN-ID it should disconnect all the connected devices and remove the routing entries for the mobile devices.

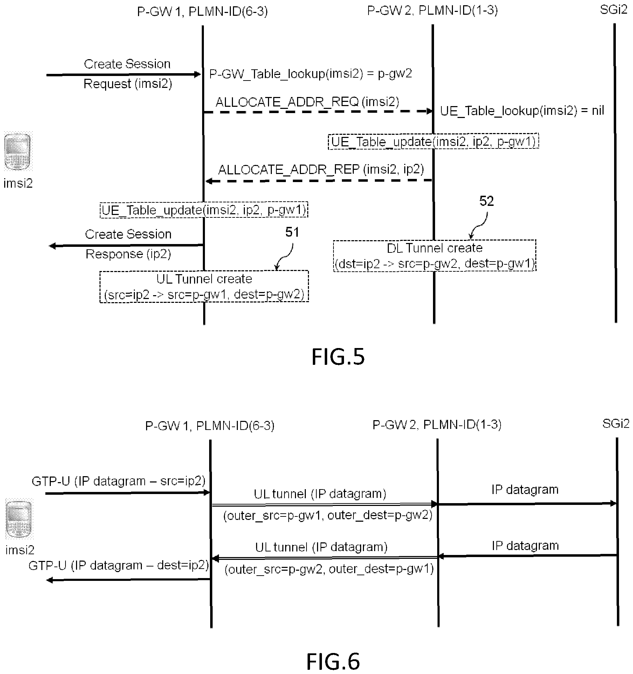

With reference now to figure 4 and 5, a network entry, respectively, in a Home PLMN and in a Visited PLMN is illustrated.

In figure 4, a UE imsi1 - supposed to be in home PLMN (PLMN 6-3) - is assigned an UE IP address ip1 from P-GW 1 of identifier PLMN-ID=6-3, following a create session request (imsi1)/response(ip1) (step 41 in figure 4). Accordingly, the table of UEs attached to P-GW is updated by adding therein the new entry UE_Table_update(imsil, ip1, p-gw1). As illustrative example, ip1 within home PLMN 6-3 subnet may be 10.6.3.2.

Once, the UE imsi1 is attached to P-GW 1, UE imsi1 upload and download traffic are handled (step 42 in figure 4) by the SG11.

By the end of the session, the address IP ip1 of UE imsi1 is released (step 43 in figure 4) following a Delete Session Request(imsi1, cause)/Response(ip1). As a consequence, the UE_Tab!e within P-GW 1 is updated by eliminating the entry associated to UE imsi1 (UE_Table_update(imsil, ip1, nil). It is to be noted that, depending on the cause value, the update of UE_Tab!e may or not be performed (UE_Table_lookup(imsi1)=p-gw1). In other words, if UE imsi1 timed out on home P-GW 1 and already moved to a visited P-GW, then the home P-GW 1 must ignore the address release request (Release_Addr_Req).

In the case of a network entry in visited PLMN (figure 5), the UE imsi2 being not in its home PLMN (PLMN_ID 1-3), it is assigned an IP address ip2 by home PLMN subnet (i.e. 10.1.3.2) through unicast protocol between P-GWs. In fact, following to the Create Session Request addressed by the UE imsi2 toward P-GW 1, an IP address allocation request is sent from P-GW 1 (PLMN-ID=6-3) to P-GW 2 (PLMN-ID=1-3). In response, an IP address is allocated by P-GW 2 to UE imsi2. UE_table of P-GW 1 and P-GW 2 are both updated with the entry UE_Table_update(imsi2, ip2, p-gw1).

It is to be noted that, P-GW 2 identifier (PLMN-ID=1-3) is obtained by P-GW 1 (PLMN-ID=6-3) via a lookup table (P-GW_Tablelookup(imsi2)=p-gw2) based on the identifier imsi (International Mobile Subscriber Identity ) of the UE imsi2.

Once the session is created (i.e. an IP address ip2 is allocated to imsi2), a tunnel is created between P-GW 1 and P-GW 2 and wherein the uplink tunnel is created by P-GW 1 (step 51 in figure 5) and the downlink tunnel is created by P-GW 2 (step 52 in figure 5). Such tunnel may be IPIP or GRE, as well as it may be encrypted or not. Upload and download IP datagram are encapsulated and passed through the created tunnel (figure 6).

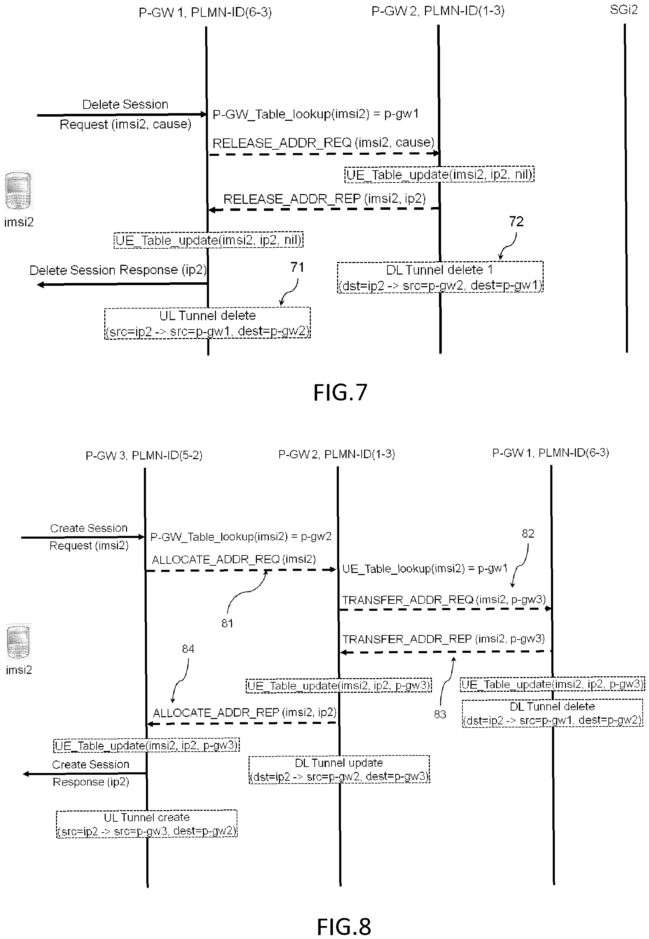

Session termination (figure 7) is achieved through a conventional Delete Session Request(imis2, cause)/Response(ip2) which also lead to the created tunnel delete (i.e. downlink and uplink tunnel delete: step 71 and 72 in figure 7). Besides, UE_Table of P-GW 1 and P-GW 2 are updated in order to take into account the occurred event, i.e. ip2 release (UE_Table_update(imsi2, ip2, nil). This update may depend on the "cause" value comprised in the Delete_Session_Request(imsi2, cause) (i.e. if UE timed out on visited P-GW and already moved to another visited P-GW, then the home P-GW shall ignore the RELEASE_ADDR_REQ and related tunnel operation).

It is to be noted that the main difference between the scenarios depicted in Figure 4 and that of figures 5-7 is the establishment of the tunnel for home routed traffic. In fact, when a UE connects to the visited PLMN, the P-GW by means of the information contained in the imsi, derives the P-GW to be contacted and the lookup table completes the information with the IP address. It is also to be noted that the traffic is always home routed thus simplifying the address preservation allocation.

Figure 8 represents the case wherein the UE imsi2 is moving between non-home PLMNs. As an illustrative example, consider the case wherein the UE imsi2 is moving from PLMN-ID(6,3), which comprises P-GW 1, to PLMN-ID (5,2) which comprises P-GW 3. The session continuity is assured for UE imsi2 on a newly created tunnel between the visiting P-GW 3 and home P-GW 2, while keeping on the same IP address ip2 allocated to UE imsi2 by home P-GW 2. In other words, the tunnel is deleted on P-GW 1, created on P-GW 3 and updated on P-GW2, and the allocated IP address ip2 is retrieved from P-GW 1 (message 81-84 in figure 8), thereby allowing session continuity. Accordingly, an IP address allocated during a session to an UE is kept the same even if the UE moves to another access network during the ongoing session, wherein the home P-GW acts during an ongoing session as an "IP anchor point".

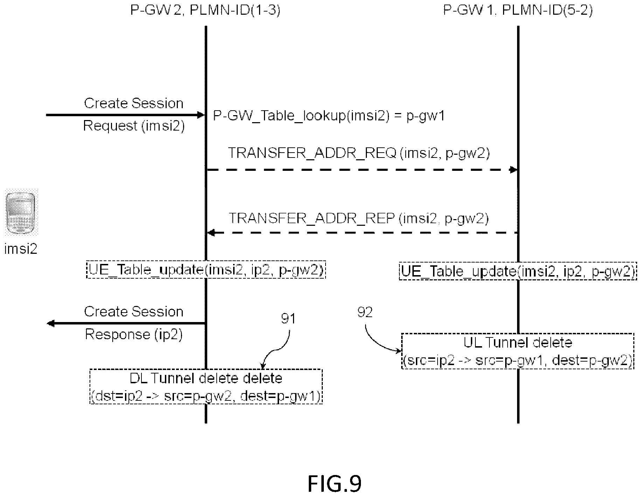

When the UE imsi2 is returning home PLMN (figure 9), the tunnel is deleted (step 91 and 92 in figure 9), and, consequently, the UE imsi2 is directly attached to P-GW2.

It is to be noted that in conjunction with the tunnel delete in P-GW 1 (in the scenario of figure 8 as well as 9), P-GW 1 initiates a detach procedure for the UE imsi2 toward the MME.

It is to be emphasized that throughout the specification,
- the reference to an "IP address" should be understood that IP address means any network protocol address, including but not limited to IPV4 or IPV6;
- only one P-GW connection is considered, however this is by no means limitative as a UE may have multiple P-GW connections open simultaneously. An IP address may be allocated to each application in use in the UE by the P-GW or service per P-GW connected thereto.

Advantageously, the above described roaming embodiments
- comprise a simple, dynamic, distributed protocol design not requiring the complex machinery standardized by the 3GPP;
- permit legacy 3GPP and LTE accesses to inter-work with non-3GPP accesses ;
- cover the two main roaming scenarios home routed access and visited access without having to re-establish the connection or lose the connection at any point;
- permit to retain a stable "IP anchor point" in the network which allows for not having to change the IP address when moving, during a communication session, from one PLMN to another;
- being a simple IP protocol, minimize the impact on existing solutions.

## Claims

1. A packet data network gateway (1-5) providing connectivity to a user equipment to a packet data network and configured to allocate, from a predefined address space (Ad1-Ad5), an IP address to the user equipment that uses to connect to the said packet data network, the said packet data network gateway (1-5) being further configured to multicast the allocated IP address over a predefined interconnect.

2. The packet data network gateway (1-5) of claim 1, further comprising means for receiving and storing information transmitted thereto over the predefined interconnect.

3. The packet data network gateway (1-5) of claim 2, wherein it is further configured, when it receives a create session request from a user equipment having an identifier (imsi1, imsi2), to perform a look-up in the stored information based on the identifier of the user equipment.

4. The packet data network gateway (1-5) of any of the preceding claims, wherein the predefined address space (Ad1-Ad5) is an IP address block from a predefined private address space (Ad0).

5. The packet data network gateway (1-5) of any of the preceding claims, wherein the address space comprises an indication on the packet data network.

6. The packet data network gateway (1-5) of the preceding claim, wherein the indication comprises the mobile network code of the packet data network.

7. The packet data network gateway (1-5) of claim 5, wherein the indication comprises further the mobile country code of the packet data network.

8. An interconnect (10) of a plurality of packet data network gateways (1-5), each of the said plurality of packet data network gateways (1-5) providing connectivity to a user equipment to a packet data network and configured
- to allocate, from a predefined address space (Ad1-Ad5), an IP address to the user equipment that uses to connect to the said packet data network; and
- to multicast the allocated IP address over the said interconnect (10).

9. The interconnect (10) of the preceding claim, wherein the address space (Ad1-Ad5) allocated for a packet data network gateway (1-5) is an IP address block from a private shared address space (Ad0) across the said interconnect (10).

10. The interconnect (10) of any of claims 8 to 9, wherein each packet data network gateway (1-5) is configured, so as to be provided with information concerning the others packet data networks gateways (1-5) currently involved in the said interconnect (10),
- to announce its attachment to the interconnect (10) by multicasting an information thereof;
- to store a received information from a packet data network gateway over the interconnect (10);
- to inform its leaving ;
- to update the stored information following receiving a leaving message.

11. The interconnect (10) of the preceding claim, wherein the information comprises at least the identifier of packet data network gateway (1-5).

12. The interconnect (10) of any of claims 10 to 11, wherein each packet data network gateway (1-5) is configured, when it receives a create session request from a user equipment having an identifier (imsi1, imsi2),
- to perform a look-up in the stored information based on the identifier (imsi1, imsi2) of the user equipment in order to determine the data packet network gateway corresponding thereto;
- to transmit an address allocation request to the determined packet data network gateway (1-5), said address to be allocated to the said user equipment;
- to transfer the address allocation response to the said user eauipment.

13. A method for permitting roaming in a communication system comprising a plurality of packet data network, each being provided with a packet data network gateway (1-5), said method comprising the following steps
- interconnecting the packet data network gateways (1-5) in a interconnect (10) implementing a predefined IP addressing model;
- storing within each packet data network gateway (1-5) an information about the currently involved packet data network gateway in the said interconnect (10).

14. The method of the preceding claim, wherein the interconnecting step comprise the allocation of an IP address block (Ad1-Ad5) from a private shared address space (Ad0) across the said interconnect (10).

15. The method of the preceding claim, wherein the allocated IP address block (Ad1-Ad5) comprises an indication on the packet data network.

16. The method of any of claims 13 to 15, wherein on receiving by a packet data network gateway of a create session request from a user equipment having an identifier (imsi1, imsi2),
- performing a look-up in the stored information based on the identifier (imsi1, imsi2) the user equipment in order to determine the data packet network gateway corresponding thereto ;
- transmitting an address allocation request to the determined packet data network gateway (1-5), said address to be allocated to the said user equipment;
- transferring the address allocation response to the said user equipment.
